# EUROPEAN PATENT APPLICATION

(11) **EP 4 723 291 A1**
(43) Date of publication of application: **08.04.2026**
(21) Application number: 25201578.9
(22) Date of filing: 11.09.2025
(51) Int. Cl.: H01M 10/0587, H01M 50/533, H01M 50/538, H01M 50/107

(54) **SECONDARY BATTERY, BATTERY ASSEMBLY, AND ELECTRONIC DEVICE**

(30) Priority: 20.09.2024 CN 202422300145 U
(71) Applicant: AESC Japan Ltd., Yokohama-shi, Kanagawa 220-0012 (JP)
(72) Inventor: ZHANG, Wenjing, Jiangyin City, Wuxi City, 214443 (CN)
(74) Representative: Becker, Eberhard

(57) **Abstract**

A secondary battery (1), a battery assembly (100), and an electronic device (1000) are provided. The secondary battery (1) includes: a housing (10) and an electrode assembly (20) accommodated in the housing (10). The electrode assembly (20) includes a wound structure (201) formed by a positive electrode sheet (21), a separator (22), and a negative electrode sheet (23). A positive electrode current collector (211) of the positive electrode sheet (21) includes a positive electrode coated region (212) and a positive electrode uncoated region (213). A negative electrode current collector (231) of the negative electrode sheet (23) includes a negative electrode coated region (232) and a negative electrode uncoated region (233). A part of the positive electrode uncoated region (213) is bent to form a stacked positive electrode tab region (2131). A part of the negative electrode uncoated region (233) is bent to form a stacked negative electrode tab region (2331).

## Description

### BACKGROUND

### Technical Field

The present disclosure relates to a secondary battery, a battery assembly, and an electronic device.

### Description of Related Art

As the society and economy advances, an increasing number of electrical devices employ secondary batteries as energy storage and supply devices, including but not limited to new energy vehicles, telecommunications base stations, and energy storage containers.

Current secondary batteries include an electrode assembly and a housing. The electrode assembly generally includes a positive electrode, a negative electrode, and a separator. A positive electrode tab and a negative electrode tab of the electrode assembly respectively extend from both sides of the electrode assembly. After cutting and stacking, the positive electrode tab and the negative electrode tab are pressed, and then respectively welded with corresponding current collecting plates.

### SUMMARY

The technical problem to be solved by the present disclosure is to overcome the above technical problem and provide a secondary battery, a battery assembly, and an electronic device.

The present disclosure solves the above technical problem through the following technical solution.

A secondary battery, including:
A housing;
An electrode assembly, accommodated in the housing, wherein the electrode assembly includes a wound structure formed by stacking and winding a positive electrode sheet, a separator and a negative electrode sheet; the positive electrode sheet includes a positive electrode current collector, the negative electrode sheet includes a negative electrode current collector; along an axial direction of the wound structure, the positive electrode current collector includes a positive electrode coated region covered by a positive electrode active substance layer and a positive electrode uncoated region not covered by the positive electrode active substance layer, the negative electrode current collector includes a negative electrode coated region covered by a negative electrode active substance layer and a negative electrode uncoated region not covered by the negative electrode active substance layer;
Along a radial direction of the wound structure, a part of the positive electrode uncoated region bends toward a center hole of the wound structure, and the positive electrode uncoated region formed in different number of turns are stacked onto each other to form a stacked positive electrode tab region, the stacked positive electrode tab region includes a positive electrode tab stack layer number stable region, within the positive electrode tab stack layer number stable region, the number of layers of stacked positive electrode tab is m;
Along the radial direction of the wound structure, a part of the negative electrode uncoated region bends toward the center hole, and the negative electrode uncoated region formed in different number of turns are stacked onto each other to form a stacked negative electrode tab region, the stacked negative electrode tab region includes a negative electrode tab stack layer number stable region, within the negative electrode tab stack layer number stable region, the number of layers of stacked negative electrode tab is n;
Wherein, m>n.
A battery assembly includes the secondary battery as described above.
An electronic device includes the battery assembly as described above.

The positive and inventive effects of the present disclosure lie in the following:
By setting the number of turns of the positive electrode tab located in the positive electrode tab stack layer number stable region to be greater than the number of turns of the negative electrode tab located in the negative electrode tab stack layer number stable region, the present disclosure may ensure that there are sufficient number of stack layers of the unwelded tab reserved in both the positive electrode tab stack layer number stable region and the negative electrode tab stack layer number stable region, thereby preventing the separator from being burned during the welding process. Meanwhile, the number of layers of the stacked negative electrode tab is increased as little as possible, so as not to affect an energy density of the secondary battery. That is, the energy density of the secondary battery is improved while the separator is kept from being burned.

### BRIEF DESCRIPTION OF THE DRAWINGS

FIG. 1 is a schematic cross-sectional structural view of a secondary battery according to a preferred embodiment of the present disclosure.
FIG. 2 is a schematic view of a partially enlarged structure of a part A in FIG. 1.
FIG. 3 is a schematic three-dimensional structural view of an electrode assembly of a secondary battery according to a preferred embodiment of the present disclosure.
FIG. 4 is a schematic cross-sectional structural view of an electrode assembly of a secondary battery according to a preferred embodiment of the present disclosure.
FIG. 5 is a schematic structural view of a positive electrode sheet of a secondary battery in an unwound state according to a preferred embodiment of the present disclosure.
FIG. 6 is a schematic view of a partial structure of a positive electrode sheet of a secondary battery in an unfolded state according to a preferred embodiment of the present disclosure.
FIG. 7 is a partial cross-sectional structural view of an electrode assembly of a secondary battery according to a preferred embodiment of the present disclosure.
FIG. 8 is a schematic structural view of a negative electrode sheet of a secondary battery in an unwound state according to a preferred embodiment of the present disclosure.
FIG. 9 is a schematic view of a partial structure of a negative electrode sheet of a secondary battery in an unfolded state according to a preferred embodiment of the present disclosure.
FIG. 10 is a partial cross-sectional structural view of an electrode assembly of a secondary battery according to a preferred embodiment of the present disclosure.
FIG. 11 is a partial cross-sectional structural view of an electrode assembly of a secondary battery according to a preferred embodiment of the present disclosure.
FIG. 12 is a schematic view of a partially enlarged structure of a part B in FIG. 11.
FIG. 13 is a schematic view of a partially enlarged structure of a part C in FIG. 11.
FIG. 14 is a partial cross-sectional structural view of a single-turn positive electrode sheet of a secondary battery according to a preferred embodiment of the present disclosure.
FIG. 15 is a partial cross-sectional structural view of a single-turn positive electrode sheet of a secondary battery according to a preferred embodiment of the present disclosure.
FIG. 16 is a partial cross-sectional structural view of a single-turn negative electrode sheet of a secondary battery according to a preferred embodiment of the present disclosure.
FIG. 17 is a partial cross-sectional structural view of a single-turn negative electrode sheet of a secondary battery according to a preferred embodiment of the present disclosure.
FIG. 18 is a schematic structural view of a battery assembly according to a preferred embodiment of the present disclosure.
FIG. 19 is a schematic structural view of an electronic device according to a preferred embodiment of the present disclosure.

### DESCRIPTION OF THE EMBODIMENTS

A preferred embodiment is exemplified below and combined with the accompanying drawings to more clearly and thoroughly illustrate the present disclosure.

In the related art, the number of stacked layers of the positive electrode tab and the negative electrode tab of the secondary battery after bending are normally the same. If the number of stacked layers provided in the weld regions of the positive electrode tab and the negative electrode tab is insufficient, causing an inadequate number of unwelded stacked layers reserved in the region, a separator will be burned during a welding process. However, if there is an excessive number of stacked layers in the weld regions of the positive electrode tab and the negative electrode tab, an energy density of the battery may be reduced.

Specifically, the positive electrode tab of an aluminum metal material and a current collecting plate are generally welded through a red light, and the negative electrode tab of a copper metal material and the current collecting plate are welded through a green light. Because aluminum metal has a low absorption rate for a green light laser and has a high absorption for the red light, so the aluminum metal is generally welded using a red light laser; while copper metal has a high absorption for the green light, so the copper metal is generally welded using the green light laser.

However, since the red light laser is less stable compared to the green light laser, welding with the red light laser requires reserving more layers of the tabs than with the green light laser for the same number of target welding layers. In current secondary batteries, the number of stacked layers of the positive electrode tab and the negative electrode tab of the secondary battery after bending are normally the same. If the number of stacked layers provided in the weld regions of the positive electrode tab and the negative electrode tab is insufficient, causing an inadequate number of unwelded stacked layers reserved in the region, a separator will be burned during a welding process. However, if there is an excessive number of stacked layers in the weld regions of the positive electrode tab and the negative electrode tab, an energy density of the battery may be reduced.

Therefore, how to keep a balance between the number of layers of the tabs and the energy density of the battery in the weld regions of the positive electrode tab and the negative electrode tab is a technical problem that urgently needs to be solved in this field.

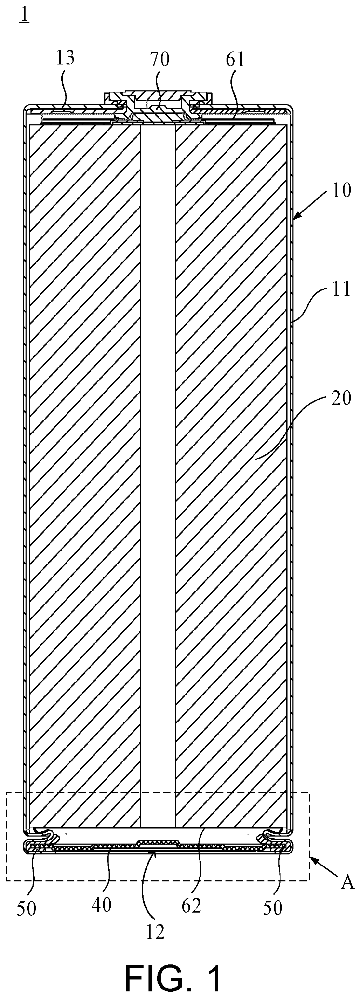

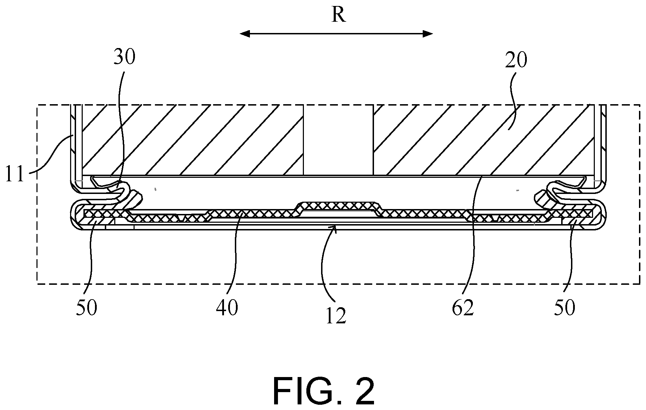

As shown in FIG. 1 and FIG. 2, this embodiment provides a secondary battery 1. The secondary battery 1 includes: a housing 10 and an electrode assembly 20. The electrode assembly 20 is accommodated in the housing 10.

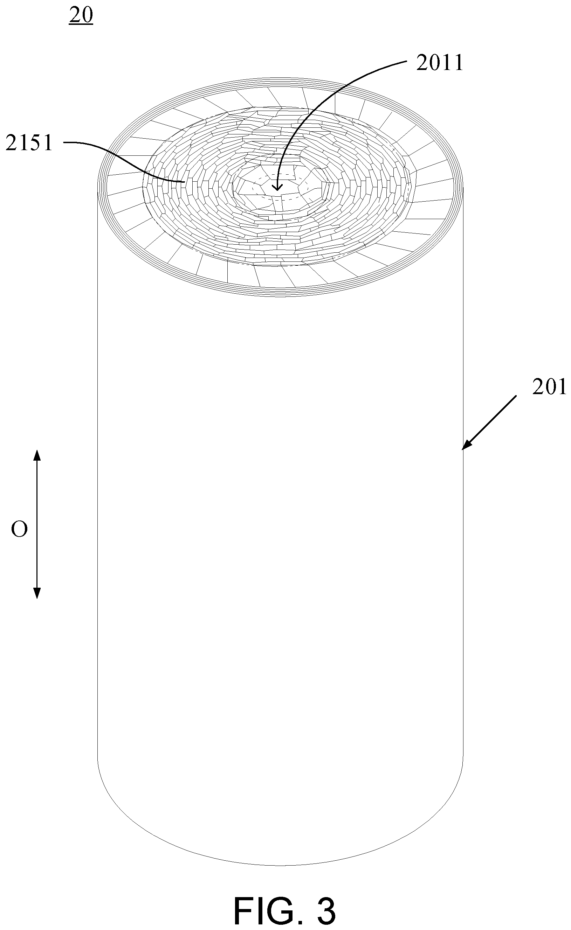

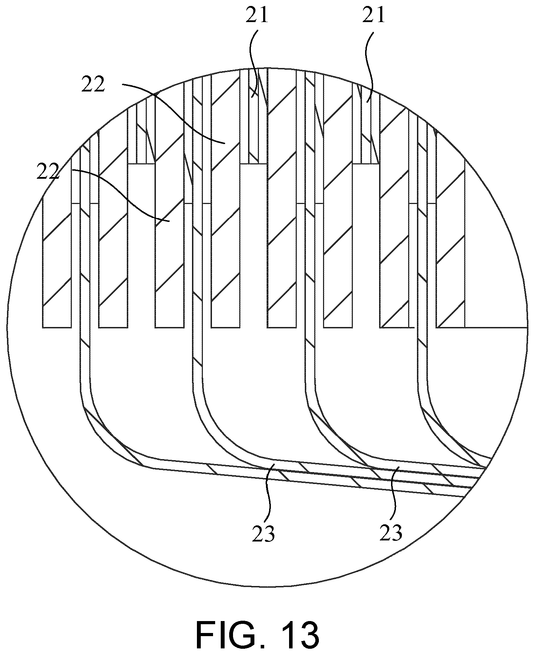

As shown in FIG. 3, FIG. 4, FIG. 11 to FIG. 13, the electrode assembly 20 includes a wound structure 201 formed by stacking and winding a positive electrode sheet 21, a separator 22, and a negative electrode sheet 23. A center hole 2011 is generally formed in the middle of the wound structure 201 formed by stacking and winding the positive electrode sheet 21, the separator 22, and the negative electrode sheet 23. An axial direction of the center hole 2011 is an axial direction O of the wound structure 201, and the axial direction O of the wound structure 201 is in the same direction as a height direction of the secondary battery 1.

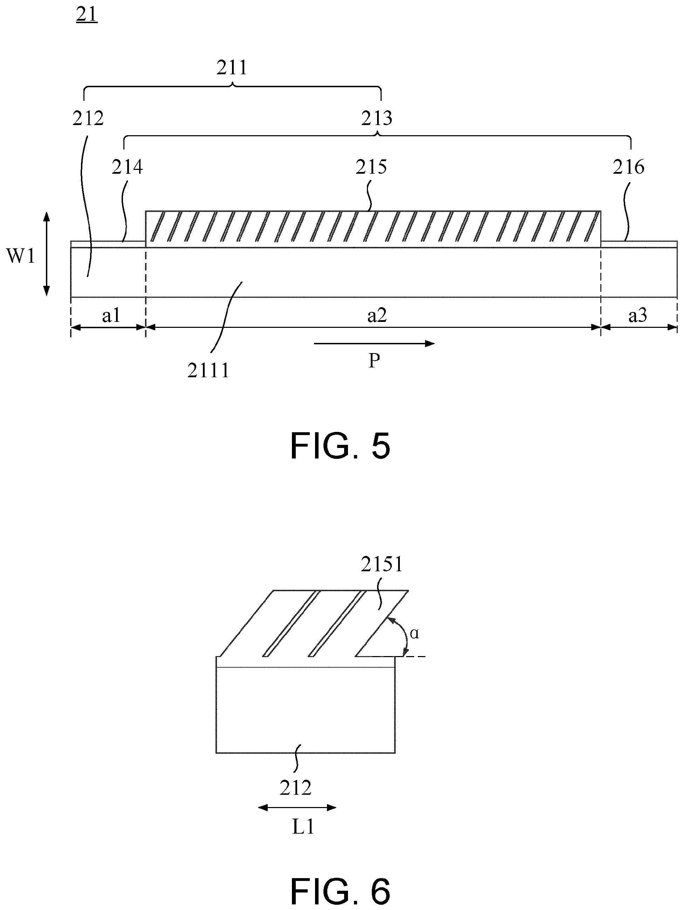

As shown in FIG. 5 to FIG. 7, the positive electrode sheet 21 includes a positive electrode current collector 211. Along the axial direction O of the wound structure 201, the positive electrode current collector 211 includes a positive electrode coated region 212 covered by a positive electrode active substance layer 2111 and a positive electrode uncoated region 213 not covered by the positive electrode active substance layer 2111. Along a radial direction R of the wound structure 201, a part of the positive electrode uncoated region 213 bends toward the center hole 2011 of the wound structure 201, and the positive electrode uncoated region 213 formed in different number of turns are stacked onto each other to form a stacked positive electrode tab region 2131. The stacked positive electrode tab region 2131 includes a positive electrode tab stack layer number stable region 21312, and in the positive electrode tab stack layer number stable region 21312, the number of layers of stacked positive electrode tab 2151 is m.

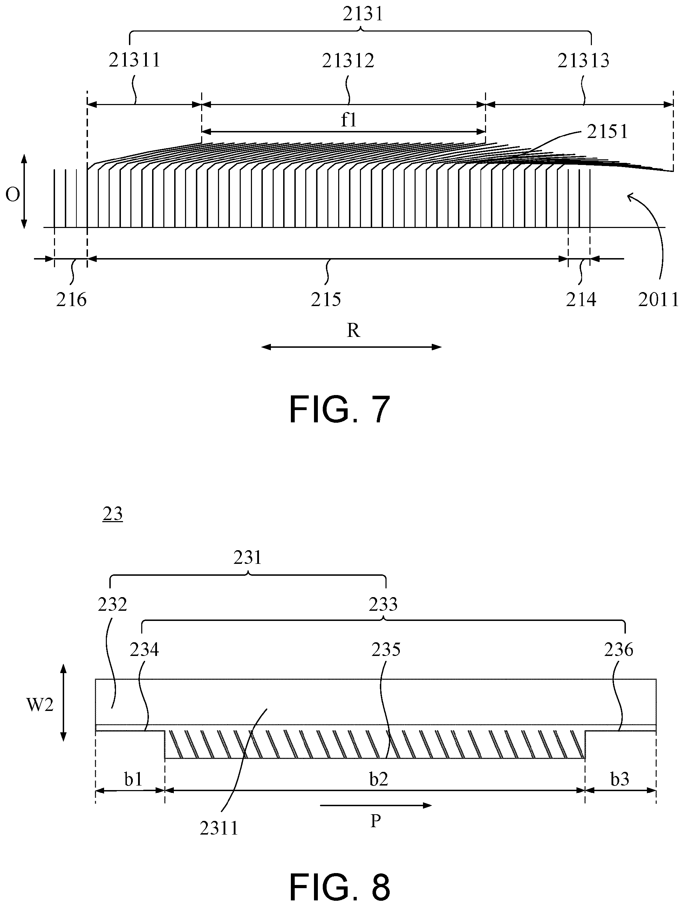

As shown in FIG. 8 to FIG. 10, the negative electrode sheet 23 includes a negative electrode current collector 231. Along the axial direction O of the wound structure 201, the negative electrode current collector 231 includes a negative electrode coated region 232 covered by a negative electrode active substance layer 2311 and a negative electrode uncoated region 233 not covered by the negative electrode active substance layer 2311. Along the radial direction R of the wound structure 201, a part of the negative electrode uncoated region 233 bends toward the center hole 2011, and the negative electrode uncoated region 233 formed in different number of turns are stacked onto each other to form a stacked negative electrode tab region 2331. The stacked negative electrode tab region 2331 includes a negative electrode tab stack layer number stable region 23312, and in the negative electrode tab stack layer number stable region 23312, the number of layers of stacked negative electrode tab 2351 is n.

Wherein, m>n.

In this way, by setting the number of turns m of the stacked positive electrode tab 2151 located in the positive electrode tab stack layer number stable region 21312 to be greater than the number of turns n of the stacked negative electrode tab 2351 located in the negative electrode tab stack layer number stable region 23312, it is possible to ensure that there are sufficient number of stack layers of the unwelded tab reserved in both the positive electrode tab stack layer number stable region 21312 and the negative electrode tab stack layer number stable region 23312, thereby preventing the separator 22 from being burned during the welding process. Meanwhile, the number of layers of the stacked negative electrode tab 2351 is increased as little as possible, so as not to affect the energy density of the secondary battery 1. That is, the energy density of the secondary battery 1 is improved while the separator 22 is kept from being burned. It should be noted that, in the positive electrode tab stack layer number stable region 21312, i.e., a positive electrode tab weld region, the number of layers of the stacked positive electrode tab 2151 in the positive electrode tab weld region is positively correlated with thicknesses of the positive electrode active substance layer 2111, the positive electrode current collector 211, and the separator 22. The number of layers of the stacked positive electrode tab 2151 in the positive electrode tab weld region includes the number of layers welded to a first current collecting plate 61 and the number of layers not welded to the first current collecting plate 61. The number of layers not welded to the first current collecting plate 61 is the reserved and redundant number of layers of the stacked positive electrode tab 2151, which serves to prevent the separator 22 from being burned during the welding process. Similarly, in the negative electrode tab stack layer number stable region 23312, i.e., a negative electrode tab weld region, the number of layers of the negative electrode tab 2351 in the negative electrode tab weld region is negatively correlated with thicknesses of the negative electrode active substance layer 2311, the negative electrode current collector 231, and the separator 22. The number of layers of the negative electrode tab 2351 in the negative electrode tab weld region includes the number of layers welded to a second current collecting plate 62 and the number of layers not welded to the second current collecting plate 62. The separator 22 is made of an insulation material, specifically the insulation material may be PP (polypropylene) or PE (polyethylene), etc.

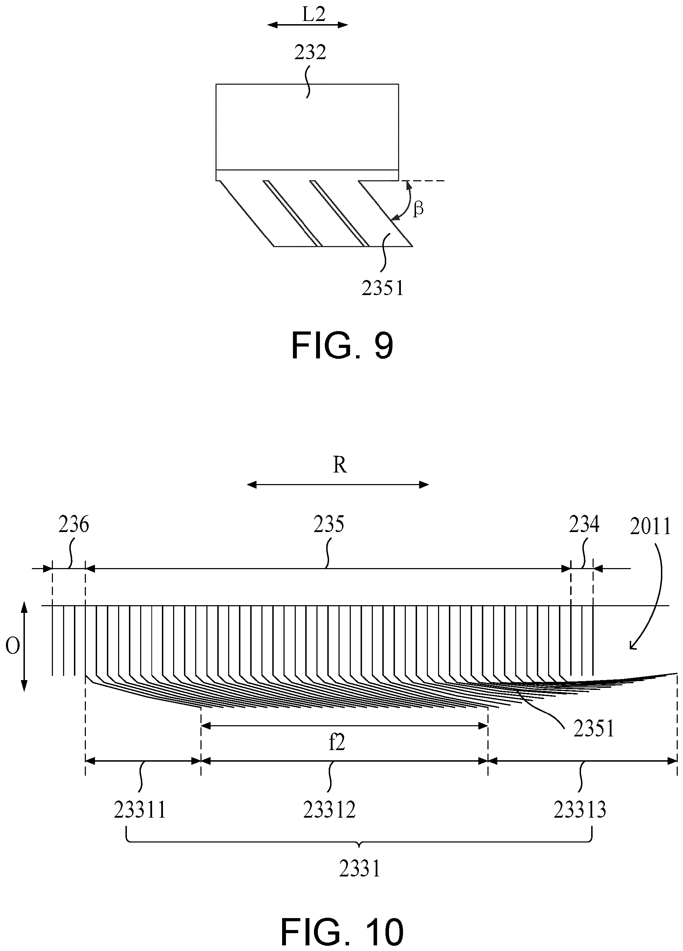

Please refer to FIG. 7, along the radial direction R of the wound structure 201, from an outer periphery to the center hole 2011, the stacked positive electrode tab region 2131 sequentially includes a positive electrode tab stack layer number increasing region 21311, the aforementioned positive electrode tab stack layer number stable region 21312, and a positive electrode tab stack layer number decreasing region 21313. Please refer to FIG. 10, along the radial direction R of the wound structure 201, from the outer periphery to the center hole 2011, the stacked negative electrode tab region 2331 sequentially includes a negative electrode tab stack layer number increasing region 23311, the aforementioned negative electrode tab stack layer number stable region 23312, and a negative electrode tab stack layer number decreasing region 23313.

Along the radial direction R of the wound structure 201, a part of the positive electrode uncoated region 213 bends toward the center hole 2011 of the wound structure 201, such that a change occurs where the number of layers gradually increases to stable and then gradually decreases from an outer periphery of the wound structure 201 to the center hole 2011, correspondingly forming the stacked positive electrode tab region 2131 that sequentially includes the positive electrode tab stack layer number increasing region 21311, the positive electrode tab stack layer number stable region 21312, and the positive electrode tab stack layer number decreasing region 21313, wherein the positive electrode tab stack layer number stable region 21312 has the highest number of layers that are distributed more evenly. Similarly, the correspondingly formed stacked negative electrode tab region 2331 sequentially includes the negative electrode tab stack layer number increasing region 23311, the negative electrode tab stack layer number stable region 23312, and the negative electrode tab stack layer number decreasing region 23313, wherein the negative electrode tab stack layer number stable region 23312 has the highest number of layers that are distributed more evenly.

Along the radial direction R of the wound structure 201, a length f1 of the positive electrode tab stack layer number stable region 21312 is greater than a length f2 of the negative electrode tab stack layer number stable region 23312. The longer the length f1 of the positive electrode tab stack layer number stable region 21312 and the length f2 of the negative electrode tab stack layer number stable region 23312, the larger the tab stack layer number stable region becomes, and the larger the weldable region that can be formed. In this way, by setting the length f1 of the positive electrode tab stack layer number stable region 21312 to be greater than the length f2 of the negative electrode tab stack layer number stable region 23312, it is possible to indirectly realize that the number of layers of the stacked positive electrode tab 2151 located in the positive electrode tab stack layer number stable region 21312 is greater than the number of layers of the negative electrode tab 2351 located in the negative electrode tab stack layer number stable region 23312, thereby achieving improvement of the energy density of the secondary battery 1 while also preventing burning of the separator 22.

Specifically, along the axial direction O of the wound structure 201, the number of layers of the stacked positive electrode tab 2151 located in the positive electrode tab stack layer number stable region 21312 is 15 layers to 22 layers, for example, the number of layers may be 15 layers, 17 layers, 18 layers, 20 layers, or 22 layers, etc. In this way, by setting the value of the number of layers of the stacked positive electrode tab 2151 located in the positive electrode tab stack layer number stable region 21312 in a specific range, on one hand, it is possible to avoid having an insufficient number of layers of the stacked positive electrode tab 2151, and failing to reserve an adequate number of unwelded layers in the region, thus preventing the separator 22 from being burned; on the other hand, it is possible to avoid an excessive number of layers of the stacked positive electrode tab 2151 in the region, thus preventing an adverse effect on the energy density of the secondary battery 1.

Along the axial direction O of the wound structure 201, the number of layers of the stacked negative electrode tab 2351 located in the negative electrode tab stack layer number stable region 23312 is 12 layers to 18 layers, for example, the number of layers may be 12 layers, 13 layers, 15 layers, 16 layers, or 18 layers, etc. In this way, by setting the value of the number of layers of the stacked negative electrode tab 2351 located in the negative electrode tab stack layer number stable region 23312 in a specific range, on one hand, it is possible to avoid having an insufficient number of layers of the stacked negative electrode tab 2351, and failing to reserve an adequate number of unwelded layers in the region, thus preventing the separator 22 from being burned; on the other hand, it is possible to avoid an excessive number of layers of the stacked negative electrode tab 2351 in the region, thus preventing an adverse effect on the energy density of the secondary battery 1.

Along the axial direction O of the wound structure 201, a ratio of the number of layers m of the stacked positive electrode tab 2151 located in the positive electrode tab stack layer number stable region 21312 to the number of layers n of the stacked negative electrode tab 2351 located in the negative electrode tab stack layer number stable region 23312 is 1.05 to 1.5, for example, the ratio may be 1.05, 1.17, 1.2, 1.3, 1.41, or 1.5, etc. In this way, by setting the value of the ratio of the number of layers m of the stacked positive electrode tab 2151 located in the positive electrode tab stack layer number stable region 21312 to the number of layers n of the stacked negative electrode tab 2351 located in the negative electrode tab stack layer number stable region 23312 in a specific range and setting the ratio to be a suitable ratio, not only that it is possible to make the number of layers m of the stacked positive electrode tab 2151 located in the positive electrode tab stack layer number stable region 21312 to be greater than the number of layers n of the stacked negative electrode tab 2351 located in the negative electrode tab stack layer number stable region 23312, but also it is possible to set the number of layers of the stacked positive electrode tab 2151 and the stacked negative electrode tab 2351 to be with a suitable range, thereby achieving improvement of the energy density of the secondary battery 1 while preventing burning of the separator 22.

Refer to FIG. 1, preferably, the secondary battery 1 further includes a current collecting plate. The current collecting plate includes the first current collecting plate 61 and the second current collecting plate 62. The first current collecting plate 61 is welded with the positive electrode tab stack layer number stable region 21312, and the first weld mark is formed accordingly. The second current collecting plate 62 is welded with the negative electrode tab stack layer number stable region 23312, and the second weld mark is formed accordingly.

Along the axial direction O of the wound structure 201, the number of layers of the stacked positive electrode tab 2151 connected to the first weld mark is 8 layers to 12 layers, for example, the number of layers may be 8 layers, 10 layers, or 12 layers, etc. Along the axial direction O of the wound structure 201, the number of layers of the stacked negative electrode tab 2351 connected to the second weld mark is 8 layers to 12 layers, for example, the number of layers may be 8 layers, 10 layers, or 12 layers, etc. In this way, by setting the value of the number of layers of the stacked positive electrode tab 2151 connected to the first weld mark and the number of layers of the stacked negative electrode tab 2351 connected to the second weld mark in a specific range, it is possible to effectively ensure the welding strength between the positive electrode tab 2151 and the first current collecting plate 61, as well as the welding strength between the negative electrode tab 2351 and the second current collecting plate 62.

Along the axial direction O of the wound structure 201, in the positive electrode tab stack layer number stable region 21312, the ratio i of the number of layers of the stacked positive electrode tab 2151 connected to the first weld mark to the number of layers m of the stacked positive electrode tab 2151 located in the positive electrode tab stack layer number stable region 21312 is 0.4 to 0.65, for example, the ratio i may be 0.4, 0.45, 0.55, 0.6, or 0.65, etc. The number of layers of the stacked positive electrode tab 2151 connected to the first weld mark is the number of layers welded with the first current collecting plate 61 located within the positive electrode tab stack layer number stable region 21312. By setting the value of the ratio i of the number of layers welded with the first current collecting plate 61 located within the positive electrode tab stack layer number stable region 21312 to the number of layers m of the stacked positive electrode tab 2151 located in the positive electrode tab stack layer number stable region 21312 in a specific range, making the ratio a suitable ratio, on one hand, it is possible to avoid having an insufficient number of layers of the stacked positive electrode tab 2151 not welded to the first weld mark, and failing to reserve an adequate number of unwelded layers in the region, thus preventing the separator 22 from being burned; on the other hand, it is possible to avoid an excessive number of layers of the stacked positive electrode tab 2151 in the region, thus preventing an adverse effect on the energy density of the secondary battery 1.

Along the axial direction O of the wound structure 201, in the negative electrode tab stack layer number stable region 23312, the ratio j of the number of layers of the stacked negative electrode tab 2351 connected to the second weld mark to the number of layers n of the stacked negative electrode tab 2351 located in the negative electrode tab stack layer number stable region 23312 is 0.5 to 0.8, for example, the ratio j may be 0.5, 0.55, 0.65, 0.7, or 0.8, etc. The number of layers of the stacked negative electrode tab 2351 connected to the second weld mark is the number of layers welded with the second current collecting plate 62 located within the negative electrode tab stack layer number stable region 23312. By setting the value of the ratio j of the number of layers welded with the second current collecting plate 62 located within the negative electrode tab stack layer number stable region 23312 to the number of layers n of the stacked negative electrode tab 2351 located in the negative electrode tab stack layer number stable region 23312 in a specific range, making the ratio a suitable ratio, on one hand, it is possible to avoid having an insufficient number of layers of the stacked negative electrode tab 2351 not welded to the second weld mark, and failing to reserve an adequate number of unwelded layers in the region, thus preventing the separator 22 from being burned; on the other hand, it is possible to avoid an excessive number of layers of the stacked negative electrode tab 2351 in the region, thus preventing an adverse effect on the energy density of the secondary battery 1.

Preferably, i<j, in this way, it is possible to ensure that sufficient number of stack layers of the unwelded tab are reserved both within the positive electrode tab stack layer number stable region 21312 and within the negative electrode tab stack layer number stable region 23312, thus preventing burning of the separator 22 during the welding process. Meanwhile, the number of layers of the stacked negative electrode tab 2351 is increased as little as possible, thereby avoiding causing an adverse effect on the energy density of the secondary battery 1.

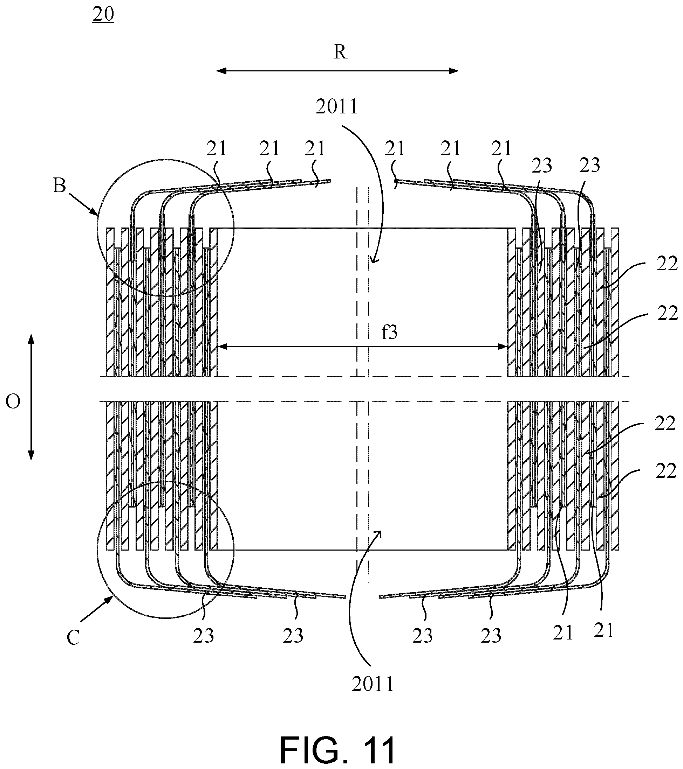

Refer to FIG. 7 and FIG. 11, preferably, along the radial direction R of the wound structure 201, a ratio of the length f1 of the positive electrode tab stack layer number stable region 21312 to a diameter f3 of the center hole 2011 is 0.5 to 1.4, for example, the ratio may be 0.5, 0.64, 0.7, 0.95, 1.23, or 1.4, etc. By setting the value of the ratio of the length f1 of the positive electrode tab stack layer number stable region 21312 to the diameter f3 of the center hole 2011 in a specific range, on one hand, it is possible to avoid the length f1 of the positive electrode tab stack layer number stable region 21312 being too long, which would cause mutual interference of tabs located near the center hole 2011, on the other hand, it is possible to avoid the length f1 of the positive electrode tab stack layer number stable region 21312 being too short, which would not provide a sufficient region for welding with the first current collecting plate 61 and would affect the welding strength.

Refer to FIG. 10 and FIG. 11, similarly, along the radial direction R of the wound structure 201, a ratio of the length f2 of the negative electrode tab stack layer number stable region 23312 to the diameter f3 of the center hole 2011 is 0.5 to 1.4, for example, the ratio may be 0.5, 0.64, 0.7, 0.95, 1.23, or 1.4, etc. By setting the value of the ratio of the length f2 of the negative electrode tab stack layer number stable region 23312 to the diameter f3 of the center hole 2011 in a specific range, on one hand, it is possible to avoid the length f2 of the negative electrode tab stack layer number stable region 23312 being too long, which would cause mutual interference of tabs located near the center hole 2011, on the other hand, it is possible to avoid the length f2 of the negative electrode tab stack layer number stable region 23312 being too short, which would not provide a sufficient region for welding with the second current collecting plate 62 and would affect the welding strength.

The diameter f3 of the center hole 2011 is 4mm to 8mm. By setting the value of the diameter f3 of the center hole 2011 in a specific range, it is possible to avoid the diameter f3 of the center hole 2011 being too small, which would cause an excessive torque during winding with a winding needle and make winding difficult. Meanwhile, it is possible to avoid the diameter f3 of the center hole 2011 being too large, which would cause the entire size to increase and reduce the energy density of the secondary battery 1.

Refer to FIG. 5, along the winding direction P of the wound structure 201, the positive electrode uncoated region 213 sequentially includes a first positive electrode uncoated region 214, a second positive electrode uncoated region 215, and a third positive electrode uncoated region 216.

Refer to FIG. 8, along the winding direction P of the wound structure 201, the negative electrode uncoated region 233 sequentially includes a first negative electrode uncoated region 234, a second negative electrode uncoated region 235, and a third negative electrode uncoated region 236.

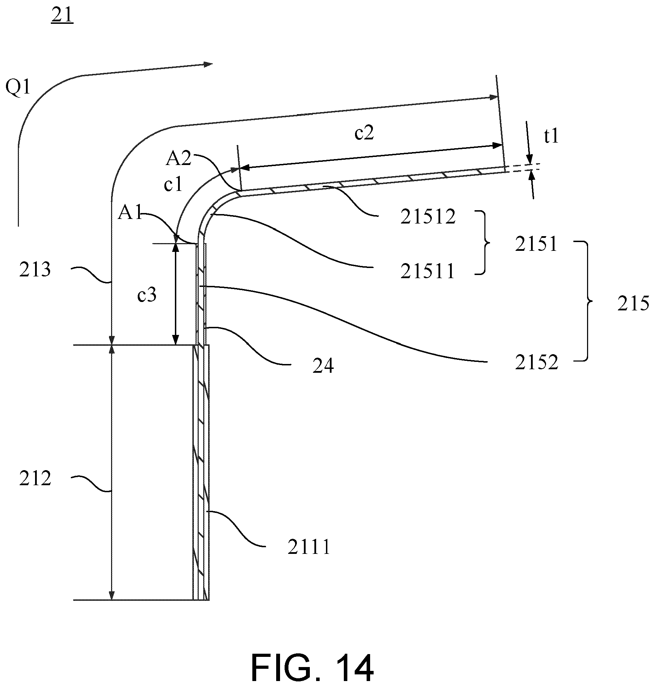

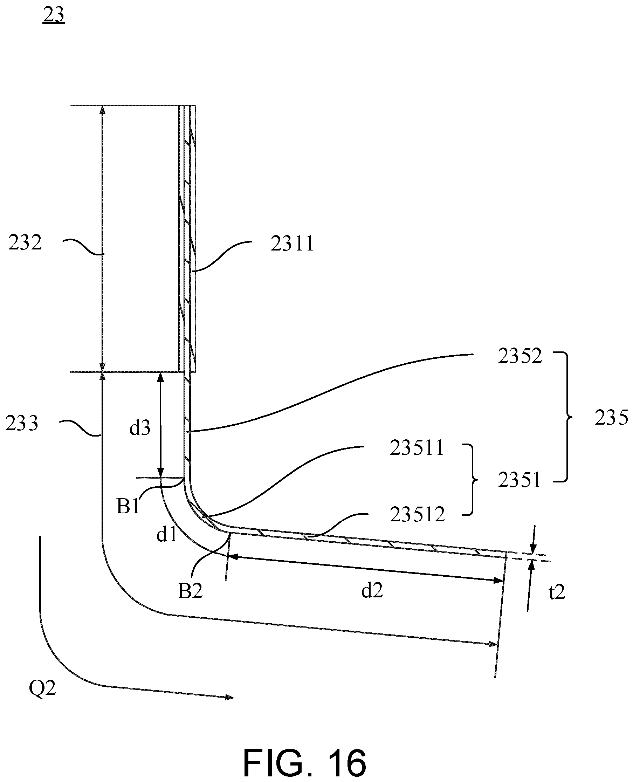

As shown in FIG. 14, a direction from the positive electrode coated region 212 to the positive electrode uncoated region 213 is a first direction Q1. Along the first direction Q1, the second positive electrode uncoated region 215 includes the positive electrode tab 2151 and a positive electrode connection region 2152 connected between the positive electrode tab 2151 and the positive electrode coated region 212, and neither the first positive electrode uncoated region 214 nor the third positive electrode uncoated region 216 includes the positive electrode tab. As shown in FIG. 16, a direction from the negative electrode coated region 232 to the negative electrode uncoated region 233 is a second direction Q2. Along the second direction Q2, the second negative electrode uncoated region 235 includes the negative electrode tab 2351 and a negative electrode connection region 2352 connected between the negative electrode tab 2351 and the negative electrode coated region 232, and neither the first negative electrode uncoated region 234 nor the third negative electrode uncoated region 236 includes the negative electrode tab. The number of turns formed by the third positive electrode uncoated region 216 is greater than the number of turns formed by the third negative electrode uncoated region 236.

In this way, by setting the number of turns formed by the third positive electrode uncoated region 216 to be greater than the number of turns formed by the third negative electrode uncoated region 236, it is possible to ensure a substantially consistent radial outward expansion of both the bent second positive electrode uncoated region 215 and the bent second negative electrode uncoated region 235 along the radial direction R of the wound structure 201, thereby avoiding affecting the energy density of the secondary battery 1. Meanwhile, by reducing the number of turns formed by the third negative electrode uncoated region 236 as little as possible, it is possible to avoid an increase in the internal resistance of the secondary battery 1. That is, the energy density of the secondary battery 1 is improved and the internal resistance is reduced.

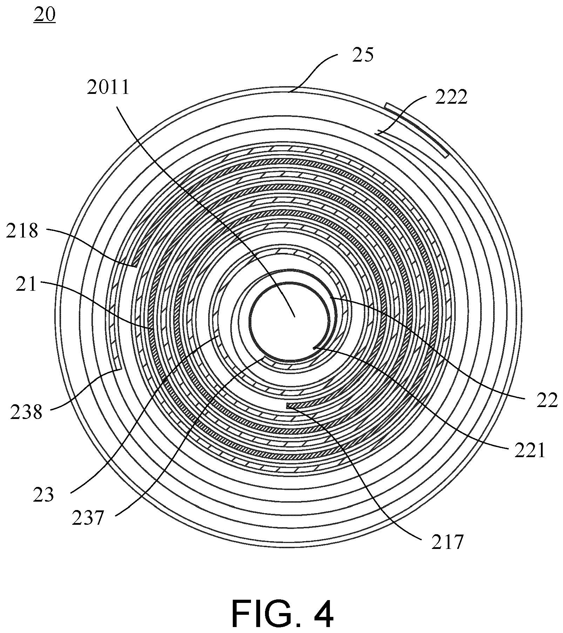

Refer to FIG. 4, in the wound structure 201, the positive electrode sheet 21 includes a positive electrode sheet starting position 217 and a positive electrode sheet ending position 218. The negative electrode sheet 23 includes a negative electrode sheet starting position 237 and a negative electrode sheet ending position 238. The separator 22 includes a separator starting position 221 and a separator ending position 222. The wound structure 201 is further covered with an insulation film 25 on the outside, and the insulation film 25 may be synthesized from PP, PE, PET, PVC or other polymer materials.

When the positive electrode sheet 21 is in an unwound state (when the positive electrode sheet 21 is unfolded), that is, in the state before winding, along the winding direction P of the wound structure 201, the positions of the first positive electrode uncoated region 214, the second positive electrode uncoated region 215, and the third positive electrode uncoated region 216 are as shown in FIG. 5. After the wound structure 201 is formed, the positions of the first positive electrode uncoated region 214, the second positive electrode uncoated region 215, and the third positive electrode uncoated region 216 are as shown in FIG. 7. Similarly, when the negative electrode sheet 23 is in an unwound state (when the negative electrode sheet 23 is unfolded), along the winding direction P of the wound structure 201, the positions of the first negative electrode uncoated region 234, the second negative electrode uncoated region 235, and the third negative electrode uncoated region 236 are as shown in FIG. 8. After the wound structure 201 is formed, the positions of the first negative electrode uncoated region 234, the second negative electrode uncoated region 235, and the third negative electrode uncoated region 236 are as shown in FIG. 10.

When the positive electrode sheet 21 is unfolded, the positive electrode current collector 211 is in a flat state, and the first direction Q1 is in the same direction as a width direction W1 of the positive electrode current collector 211. When the positive electrode sheet 21 is wound and the positive electrode tab 2151 is bent, the first direction Q1 changes with the bending of the positive electrode tab 2151. Under the circumstances, the first direction Q1 is a direction from the positive electrode connection region 2152 to the positive electrode tab 2151.

Similarly, when the negative electrode sheet 23 is unfolded, the negative electrode current collector 231 is in a flat state, and the second direction Q2 is in the same direction as a width direction W2 of the negative electrode current collector 231. When the negative electrode sheet 23 is wound and the negative electrode tab 2351 is bent, the second direction Q2 changes with the bending of the negative electrode tab 2351. Under the circumstances, the second direction Q2 is a direction from the negative electrode connection region 2352 to the negative electrode tab 2351.

It should be noted that the number of turns formed by the third positive electrode uncoated region 216 refers to the number of turns of the overlapped third positive electrode uncoated region 216 along the radial direction R of the wound structure 201 after winding. Similarly, the number of turns formed by the third negative electrode uncoated region 236 refers to the number of turns of the overlapped third negative electrode uncoated region 236 along the radial direction R of the wound structure 201 after winding. In addition, the housing 10 may include one or more electrode assemblies 20.

In this embodiment, the housing 10 includes one of the electrode assemblies 20, but is not limited thereto. In other embodiments, the number of electrode assemblies 20 that the housing 10 may include may also be two, three, four, or other values, which may be adjusted according to design requirements.

Specifically, the value of the number of turns formed by the third positive electrode uncoated region 216 is 3 to 6. In this way, by setting the value of the number of turns formed by the third positive electrode uncoated region 216 in a specific range, on one hand, it is possible to avoid an insufficient number of turns formed by the third positive electrode uncoated region 216, which would cause an excessive outward expansion of the bent second positive electrode uncoated region 215 along the radial direction R of the wound structure 201, adversely affecting the energy density of the secondary battery 1; on the other hand, it is possible to avoid an excessive number of turns formed by the third positive electrode uncoated region 216, which would cause an excessive internal resistance of the battery.

The value of the number of turns formed by the third negative electrode uncoated region 236 is 1 to 3. In this way, by setting the value of the number of turns formed by the third negative electrode uncoated region 236 in a specific range, on one hand, it is possible to avoid an insufficient number of turns formed by the third negative electrode uncoated region 236, which would cause an excessive outward expansion of the bent second negative electrode uncoated region 235 along the radial direction R of the wound structure 201, adversely affecting the energy density of the secondary battery 1; on the other hand, it is possible to avoid an excessive number of turns formed by the third negative electrode uncoated region 236, which would cause an excessive internal resistance of the battery.

Along the axial direction O of the wound structure 201, among the turns formed by the second positive electrode uncoated region 215, the second positive electrode uncoated region 215 located at the outermost turn includes a first bending part, and an orthogonal projection of the first bending part is located within the outer periphery of the wound structure 201 to ensure that the outward expansion of the bent second positive electrode uncoated region 215 along the radial direction R of the wound structure 201 does not exceed the outer periphery of the wound structure 201, thereby avoiding affecting the energy density of the secondary battery 1.

Along the axial direction O of the wound structure 201, among the turns formed by the second negative electrode uncoated region 235, the second negative electrode uncoated region 235 located at the outermost turn includes a second bending part, and an orthogonal projection of the second bending part is located within the outer periphery of the wound structure 201 to ensure that the outward expansion of the bent second negative electrode uncoated region 235 along the radial direction R of the wound structure 201 does not exceed the outer periphery of the wound structure 201, thereby avoiding affecting the energy density of the secondary battery 1.

Preferably, refer to FIG. 5, along the winding direction P of the wound structure 201, a length a1 of the first positive electrode uncoated region 214 is 400mm to 600mm, for example, the length a1 may be 400mm, 450mm, 500mm, 520mm, 580mm, or 600mm, etc. A length a2 of the second positive electrode uncoated region 215 is 3000mm to 5000mm, for example, the length a2 may be 3000mm, 3500mm, 4000mm, 4200mm, 4800mm, or 5000mm, etc. A length a3 of the third positive electrode uncoated region 216 is 200mm to 500mm, for example, the length a3 may be 200mm, 250mm, 300mm, 400mm, 450mm, or 500mm, etc.

Refer to FIG. 8, along the winding direction P of the wound structure 201, a length b1 of the first negative electrode uncoated region 234 is 300mm to 500mm, for example, length b1 may be 300mm, 350mm, 400mm, 420mm, 480mm, or 500mm, etc. A length b2 of the second negative electrode uncoated region 235 is 3000mm to 5000mm, for example, the length b2 may be 3000mm, 3500mm, 4000mm, 4200mm, 4800mm, or 5000mm, etc. A length b3 of the third negative electrode uncoated region 236 is 100mm to 300mm, for example, the length b3 may be 100mm, 150mm, 200mm, 220mm, 280mm, or 300mm, etc.

In this way, by setting the value of the length a1 of the first positive electrode uncoated region 214, the length a2 of the second positive electrode uncoated region 215, the length a3 of the third positive electrode uncoated region 216, the length b1 of the first negative electrode uncoated region 234, the length b2 of the second negative electrode uncoated region 235, and the length b3 of the third negative electrode uncoated region 236 in a specific range, the energy density may be better improved and the internal resistance of the battery may be reduced.

A ratio of the length a3 of the third positive electrode uncoated region 216 to the length b3 of the third negative electrode uncoated region 236 is 1.5 to 2.5, for example, the ratio may be 1.5, 1.7, 2, 2.1, 2.3, or 2.5, etc. In this way, by setting the value of the ratio of the length a3 of the third positive electrode uncoated region 216 to the length b3 of the third negative electrode uncoated region 236 in a specific range, making the ratio a suitable ratio, not only that the number of turns formed by the third positive electrode uncoated region 216 is greater than the number of turns formed by the third negative electrode uncoated region 236, but also the lengths of the third positive electrode uncoated region 216 and the third negative electrode uncoated region 236 are within a suitable range, so that the internal resistance of the battery may be within a suitable range.

The positive electrode tab 2151 is located within the stacked positive electrode tab region 2131, and the negative electrode tab 2351 is located within the stacked negative electrode tab region 2331.

In this embodiment, the secondary battery 1 is a columnar battery. The columnar battery has advantages including a high energy density, a long cycle life, and a good safety performance. However, it is not limited thereto, in other embodiments, the secondary battery 1 may also be a prismatic battery or in other shapes.

In this embodiment, the positive electrode tab 2151 is cut and stacked tab. When the tabs are welded to the current collecting plate of the columnar battery, the pretreatment steps of the tabs include two different treatment methods. One of the methods is a flattening tab treatment method, and the other method is a cut and stacking tab treatment method adopted by the positive electrode tab 2151 in this embodiment. Refer to FIG. 6, when the positive electrode sheet 21 is unfolded, the positive electrode current collector 211 is in a flat state, and a first acute angle α is formed by an extension direction of the positive electrode tab 2151 and a length direction L1 of the positive electrode current collector 211, wherein the first acute angle α is 30 degrees to 85 degrees. By setting the value of the first acute angle α in a specific range, the length of the positive electrode tab 2151 may be extended to a specific range while ensuring the connection strength of the positive electrode tab 2151.

The negative electrode tab 2351 is also cut and stacked tab. Refer to FIG. 9, when the negative electrode sheet 23 is unfolded, the negative electrode current collector 231 is in a flat state, a second acute angle β is formed by an extension direction of the negative electrode tab 2351 and a length direction L2 of the negative electrode current collector 231, wherein the second acute angle β is 30 degrees to 85 degrees. By setting the value of the second acute angle β in a specific range, the length of the negative electrode tab 2351 may be extended to a specific range while ensuring the connection strength of the negative electrode tab 2351.

The positive electrode connection region 2152 includes a first side away from the center hole 2011 of the wound structure 201 along the radial direction R of the wound structure 201 and a second side close to the center hole 2011, wherein at least part of a region of the first side and/or the second side is covered with an insulation layer 24 to reduce the deformation risk of the positive electrode connection region 2152, and improve the insulation performance of the positive electrode connection region 2152, thereby significantly improving the safety performance and reliability of the battery. The insulation layer 24 mainly consists of: boehmite and PVDF (polyvinylidene difluoride). A proportion of boehmite is 80%; a proportion of PVDF is 20%. A thickness of the insulation layer 24 is 1.5µm to 2.5µm, for example, the thickness may be 1.5µm, 1.7µm, 2µm, 2.1µm, 2.3µm or 2.5µm, etc. By setting the thickness of the insulation layer 24 in a specific range, it is possible to avoid a coating thickness of the insulation layer 24 being too thin, which would cause difficulty in obtaining the required electrical insulation and support strength. In the meantime, it is possible to avoid the thickness of the insulation layer 24 being too thick, which would increase a curing time of a coating layer and increase a thickness of the overall structure. Preferably, the thickness of the insulation layer 24 is 2µm.

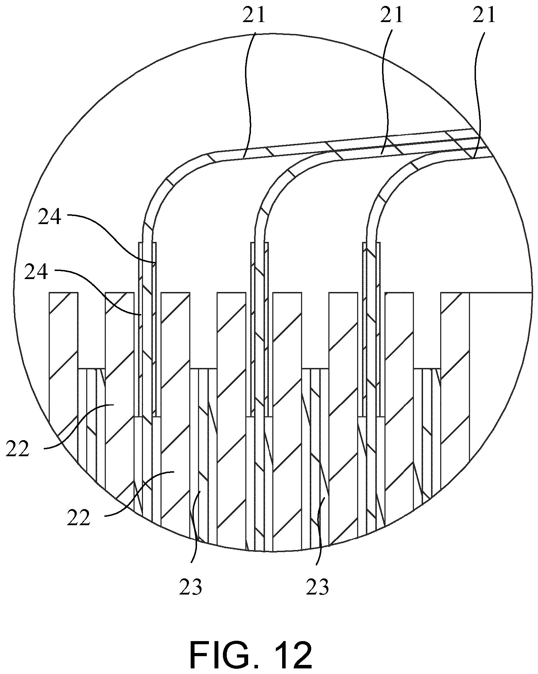

Refer to FIG. 12 and FIG. 14, in this embodiment, both the first side and the second side of the positive electrode connection region 2152 are covered with the insulation layer 24. But the disclosure is not limited thereto, in other embodiments, it may also be that only the first side of the positive electrode connection region 2152 is covered with the insulation layer 24, or only the second side of the positive electrode connection region 2152 is covered with the insulation layer 24. The design may be adjusted according to requirements.

The insulation layer 24 includes a color developer, which is used to distinguish whether a side coated with the insulation layer 24 is the front side or the back side of the positive electrode sheet 21 through the coloring effect of the color developer, including but not limited to distinguishing the surface density of the front side from the back side of the positive electrode sheet 21 and so on. The color developer mainly consists of bismuth vanadate, and has a yellow color.

In this embodiment, it may be that the first side of the positive electrode connection region 2152 is covered with the insulation layer 24 containing the color developer; the second side of the positive electrode connection region 2152 is covered with the insulation layer 24 not containing the color developer, so that the colors of the front and back sides of the positive electrode sheet 21 are different. In this way, the coloring effect of the color developer in the insulation layer 24 may be utilized to quickly distinguish the front side from the back side of the positive electrode sheet 21. Because sometimes it is required to distinguish the front side from the back side of the positive electrode sheet 21, including but not limited to distinguishing the surface density of the front side from the back side of the positive electrode sheet 21, it is necessary to add the color developer to the insulation layer 24 on one side to achieve the purpose of rapid distinction. In other embodiments, it may also be that the second side of the positive electrode connection region 2152 is covered with the insulation layer 24 containing the color developer; the first side of the positive electrode connection region 2152 is covered with the insulation layer 24 not containing the color developer, which also makes the colors of the front side and back side of the positive electrode sheet 21 different.

Preferably, the insulation layer 24 covers an entire region of the first side of the positive electrode connection region 2152, and the insulation layer 24 covers an entire region of the second side of the positive electrode connection region 2152. Along the first direction Q1, a maximum width of the insulation layer 24 is greater than or equal to a width of the positive electrode connection region 2152. In this way, it is possible to better prevent deformation of the positive electrode connection region 2152, and improve the insulation performance of this region. It should be noted that if the insulation layer 24 partially covers the positive electrode tab 2151, under the circumstances, a width of the insulation layer 24 is the maximum width.

Refer to FIG. 14, further, along the first direction Q1, the positive electrode tab 2151 includes a positive electrode tab transition part 21511 and a positive electrode tab body 21512. The positive electrode tab transition part 21511 is connected between the positive electrode connection region 2152 and the positive electrode tab body 21512. The positive electrode tab transition part 21511 is a bent region of the positive electrode tab 2151.

Refer to FIG. 16, along the second direction Q2, the negative electrode tab 2351 includes a negative electrode tab transition part 23511 and a negative electrode tab body 23512. The negative electrode tab transition part 23511 is connected between the negative electrode connection region 2352 and the negative electrode tab body 23512. The negative electrode tab transition part 23511 is a bent region of the negative electrode tab 2351.

A width c1 of the positive electrode tab transition part 21511 of the positive electrode tab 2151 located at the outermost turn is greater than a width d1 of the positive electrode tab transition part 23511 of the negative electrode tab 2351 located at the outermost turn. In this way, since a hardness of the positive electrode tab 2151 is greater than a hardness of the negative electrode tab 2351, under the pressing force during configuration, the outward expansion of the positive electrode tab 2151 along the radial direction R of the wound structure 201 is greater than the outward expansion of the negative electrode tab 2351 along the radial direction R of the electrode assembly. By setting the width c1 of the positive electrode tab transition part 21511 of the positive electrode tab 2151 located at the outermost turn to be greater than the width d1 of the positive electrode tab transition part 23511 of the negative electrode tab 2351 located at the outermost turn, the positive electrode tab 2151 may have more bent regions compared to the negative electrode tab 2351. In this way, it is possible to avoid adversely affecting the dimension of positive electrode tab body 21512 that is bent by the pressing force, so that the dimensions of the positive electrode tab body 21512 and the negative electrode tab body 23512 formed after bending are similar.

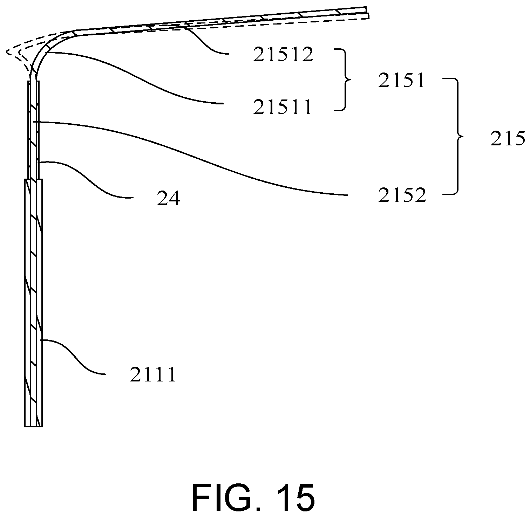

Refer to FIG. 14, preferably, along the first direction Q1, the width c1 of the positive electrode tab transition part 21511 is 1mm to 2mm, for example, the width c1 may be 1mm, 1.2mm, 1.5mm, 1.7mm, 1.9mm or 2mm, etc. In this way, by setting the value of the width c1 of the positive electrode tab transition part 21511 in a specific range, the positive electrode tab 2151 has more bent regions compared to the negative electrode tab 2351, so it is possible to avoid adversely affecting the dimension of the positive electrode tab body 21512 formed after bending. It should be noted that the positive electrode tab transition part 21511 is arc-shaped. The positive electrode tab transition part 21511 includes a first positive electrode tab transition end point A1 and a second positive electrode tab transition end point A2. The first positive electrode tab transition end point A1 is a position where the tangent of the positive electrode tab transition part 21511 intersects with an extension direction of the positive electrode connection region 2152. The second positive electrode tab transition end point A2 is a position where the tangent of the positive electrode tab transition part 21511 intersects with an extension direction of the positive electrode tab body 21512. After being pressed, the positive electrode tab transition part 21511 will deform and expand outward along the wound structure, and the formed structure is as shown in FIG. 15.

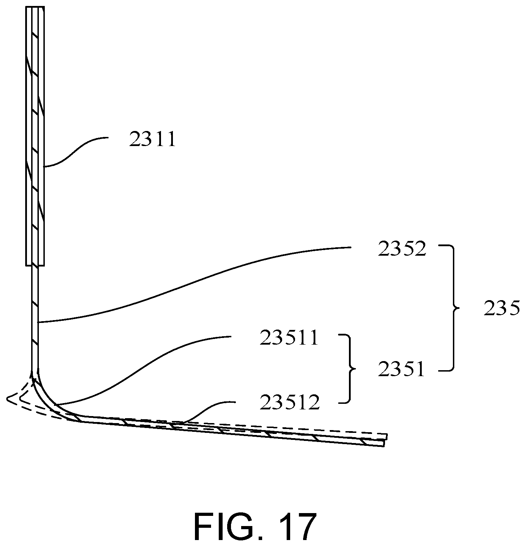

Refer to FIG. 16, preferably, along the second direction Q2, the width d1 of the negative electrode tab transition part 23511 is 0.1mm to 1mm, for example, the width d1 may be 0.1mm, 0.2mm, 0.5mm, 0.7mm, 0.9mm or 1mm, etc. In this way, by setting the value of the width d1 of the negative electrode tab transition part 23511 in a specific range, the negative electrode tab 2351 has less bent regions compared to the positive electrode tab 2151, making it possible to save the cost for tab materials. It should be noted that the negative electrode tab transition part 23511 is arc-shaped. The negative electrode tab transition part 23511 includes a first negative electrode tab transition end point B1 and a second negative electrode tab transition end point B2. The first negative electrode tab transition end point B1 is a position where the tangent of the negative electrode tab transition part 23511 intersects with an extension direction of the negative electrode connection region 2352. The second negative electrode tab transition end point B2 is a position where the tangent of the negative electrode tab transition part 23511 intersects with an extension direction of the negative electrode tab body 23512. After being pressed, the negative electrode tab transition part 23511 will deform and expand outward along the wound structure, and the formed structure is as shown in FIG. 17.

Preferably, along the first direction Q1, a width c2 of the positive electrode tab body 21512 is 4.5mm to 5.5mm, for example, the width c2 may be 4.5mm, 4.7mm, 5mm, 5.1mm, 5.3mm or 5.5mm, etc. Along the second direction Q2, a width d2 of the negative electrode tab body 23512 is 4mm to 5mm, for example, the width d2 may be 4mm, 4.2mm, 4.5mm, 4.7mm, 4.9mm or 5mm, etc. In this way, by setting the value of the width c2 of the positive electrode tab body 21512 and the width d2 of the negative electrode tab body 23512 in a specific range, it is possible to form a reasonable stacked positive electrode tab region and a reasonable stacked negative electrode tab region, thus avoiding an excessive number of layers of stacked tab in the stack region, which would reduce the energy density of the battery. If there is an insufficient number of layers of stacked tab in the stack region, and no adequate space is reserved, peripheral components (such as separator 22, etc.) might be burned during the welding process, that is, a thermal effect will affect the peripheral components, and further damaging the peripheral components.

Preferably, along the first direction Q1, a width c3 of the positive electrode connection region 2152 is 1.5mm to 2.5mm, for example, the width c3 may be 1.5mm, 1.7mm, 2mm, 2.1mm, 2.3mm or 2.5mm, etc. In this way, by setting the value of the width c3 of the positive electrode connection region 2152 in a specific range, it is possible to ensure a distance is set from a welding surface of the positive electrode current collecting plate and the positive electrode tab 2151 to the positive electrode coated region 212 covered with the positive electrode active substance layer 2111, thus avoiding the thermal effect during the welding process and improving the safety performance.

Along the second direction Q2, a width d3 of the negative electrode connection region 2352 is 1mm to 2mm, for example, the width d3 may be 1mm, 1.2mm, 1.5mm, 1.7mm, 1.9mm or 2mm, etc. In this way, by setting the value of the width of the negative electrode connection region 2352 in a specific range, it is possible to ensure a distance is set from a welding surface of the negative electrode current collecting plate and the negative electrode tab 2351 to the negative electrode coated region 232 covered with the negative electrode active substance layer 2311, thus avoiding the thermal effect during the welding process and improving the safety performance.

A thickness t1 of the positive electrode tab 2151 is 12µm to 20µm, for example, the thickness t1 may be 12µm, 14µm, 16µm, 17.5µm, 19.5µm or 20µm, etc. A thickness t2 of the negative electrode tab 2351 is 4µm to 11µm, for example, the thickness t2 may be 4µm, 6µm, 7.5µm, 8µm, 9µm or 11µm, etc. Since the positive electrode tab 2151 is typically made of aluminum, and the negative electrode tab 2351 is typically made of copper, the hardness of the positive electrode tab 2151 is higher than the hardness of the negative electrode tab 2351. By setting the value of the thickness t1 of the positive electrode tab 2151 in a specific range, it is possible to avoid the thickness t1 being too thin and torn easily during press-fitting. Also, it is possible to avoid the thickness t1 being too thick, which would increase the manufacturing cost. By setting the value of the thickness t2 of the negative electrode tab 2351 in a specific range, the use of materials may be minimized to the greatest extent on the basis of ensuring the configuration requirements of the negative electrode tab 2351, thus achieving the advantageous technical effect of saving cost.

Refer to FIG. 1 and FIG. 2, in this embodiment, the housing 10 includes a side wall 11 disposed in a surrounding manner. One end of the side wall 11 is formed with an opening 12. One end of the housing 10 near the opening 12 includes a crimping part 30 recessed toward the interior of the housing 10. The secondary battery 1 further includes: a cover plate 40, an insulation sealing member 50, and the aforementioned current collecting plate. The cover plate 40 is disposed at the opening 12. The insulation sealing member 50 is disposed around the periphery of the cover plate 40, so that the cover plate 40 and the housing 10 are insulated and sealed. The current collecting plate is disposed between the electrode assembly 20 and the cover plate 40, and is electrically connected with the housing 10. A connector of the current collecting plate is located at one side of the crimping part 30 facing the electrode assembly 20 and is connected to the crimping part 30 by welding. In this way, by setting the connector of the current collecting plate located at one side of the crimping part 30 facing the electrode assembly 20 and connected with the crimping part 30 by welding, which means that a welding region of the current collecting plate and the tabs is located at a position closer to the electrode assembly 20 compared to the crimping part 30. In this way, it is possible to prevent the impact caused by the crimping part 30 on the welding region of the tabs and the current collecting plate, thus improving the welding strength of the tabs and the current collecting plate.

Further, the housing 10 further includes an end wall 13. The side wall 11 is set around the end wall 13, and is located at one end of the side wall 11 away from the opening 12. The end wall 13 and the side wall 11 are set as an enclosure to form an accommodation chamber in the housing 10 for accommodating the electrode assembly 20, electrolyte and other necessary battery components. The connection between the end wall 13 and the side wall 11 may be implemented through various ways, for example, the connection may be formed by integral stamping, integral casting, or separate welding, etc.

The secondary battery 1 further includes a terminal 70. The terminal 70 passes through the end wall 13, and is insulated from the end wall 13.

As described above, the current collecting plate includes the first current collecting plate 61 and the second current collecting plate 62, wherein the first current collecting plate 61 is set between the electrode assembly 20 and the end wall 13, and the second current collecting plate 62 is set between the electrode assembly and the cover plate 40. In this embodiment, as described above, the first current collecting plate 61 corresponds to the positive electrode tab 2151. The positive electrode tab 2151 is electrically connected to the terminal 70 through the first current collecting plate 61. The second current collecting plate 62 corresponds to the negative electrode tab 2351. The negative electrode tab 2351 is electrically connected with the housing 10 through the second current collecting plate 62. But the disclosure is not limited to this, in other embodiments, it may also be that the first current collecting plate 61 corresponds to the negative electrode tab 2351, and the second current collecting plate 62 corresponds to the positive electrode tab 2151.

In this embodiment, a welding sequence of the first current collecting plate 61 and the second current collecting plate 62 with the electrode assembly 20 of the secondary battery 1 is as follows. First, the first current collecting plate 61 is placed. Then, the electrode assembly 20 is pressed on both the positive electrode side and the negative electrode side (the pressing process may increase the contact between the current collecting plate and the electrode assembly 20, thus avoiding false welding). The first current collecting plate 61 is welded by using linear welding instead of spot welding because the negative electrode tab 2351 is relatively soft. After pressing is performed twice, the distance between the second current collecting plate 62 and the electrode assembly 20 becomes closer. If spot welding is adopted, because heat is concentrated, the separator 22 will be burned. By means of linear welding, the generated heat is minimal, so it is possible to avoid burning the separator 22, thereby avoiding direct contact and short circuit between the positive electrodes and the negative electrodes. Subsequently, the second current collecting plate 62 is placed. Then, the electrode assembly 20 is pressed on both the positive electrode side and the negative electrode side again. Finally, the second current collecting plate 62 is welded.

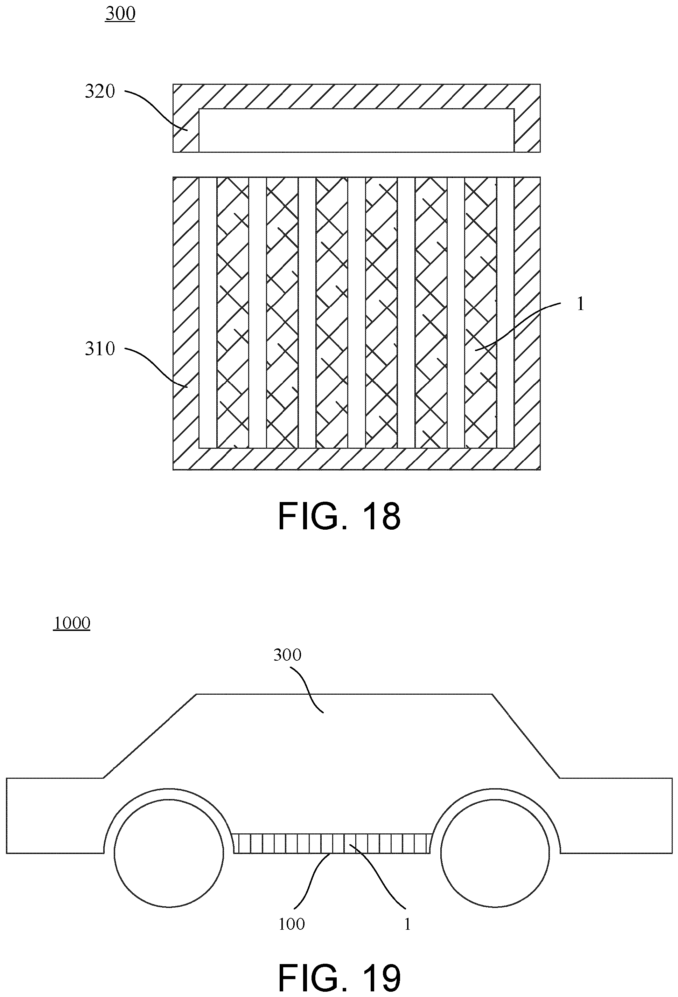

As shown in FIG. 18, the present disclosure further provides a battery assembly 100. The battery assembly 100 includes the above-mentioned secondary battery 1. In an embodiment of the battery assembly 100 of the present disclosure, the battery assembly 100 includes a box body 310, a box cover 320 and multiple secondary batteries 1. The multiple secondary batteries 1 are placed in the box body 310, connected in series or parallel with each other, or in series and parallel connection. The box cover 320 seals the box body 310 to protect the multiple secondary batteries 1. It should be noted that, the battery assembly 100 may also include a thermal management system of the battery assembly 100, circuit boards, and other parts other than the secondary battery 1 of the present disclosure. The battery assembly 100 may be a battery module or a battery assembly, an energy storage cabinet, and so on; detailed description will not be provided here.

As shown in FIG. 19, the present disclosure further provides an electronic device 1000. The electronic device 1000 includes the above-mentioned battery assembly 100. The operation part 300 is electrically connected with the battery assembly 100 to obtain electric energy support. As an example, the electronic device 1000 is a vehicle, the vehicle may be a fuel vehicle, a gas vehicle, or a new energy vehicle. The new energy vehicle may be a pure electric vehicle, a hybrid vehicle, or an extended-range vehicle, and so on, but is not limited thereto. The operation part 300 is a vehicle body. The battery assembly 100 is set at the bottom of the vehicle body, and provides electric energy support for the operation of the vehicle or the operation of electrical components in the vehicle. However, in some other embodiments, the electronic device 1000 may also be a mobile phone, a portable device, a laptop computer, a ship, a spacecraft, an electric toy, and an electric tool, etc. The spacecraft includes aircraft, rocket, space shuttle and spaceship, etc. The operation part 300 may be a unit component that is capable of obtaining electric energy from the battery assembly 100 and performing corresponding operations, such as a blade rotation unit of a fan, a dust suction operation unit of a vacuum cleaner, etc. The electric toy includes fixed or mobile electric toys, for example, a game console, an electric car toy, an electric ship toy and an electric airplane toy, etc. The electric tool includes a metal cutting electric tool, a grinding electric tool, an assembly electric tool and a railway electric tool, such as an electric drill, an electric grinder, an electric wrench, an electric screwdriver, an electric hammer, an impact drill, a concrete vibrator, and an electric planer, etc. The embodiments of the present disclosure do not impose special restrictions on the above-mentioned electronic device 1000.

## Claims

1. A secondary battery (1), comprising:
a housing (10);
an electrode assembly (20), accommodated in the housing (10), wherein the electrode assembly (20) comprises a wound structure (201) formed by stacking and winding a positive electrode sheet (21), a separator (22) and a negative electrode sheet (23), the positive electrode sheet (21) comprises a positive electrode current collector (211), the negative electrode sheet (23) comprises a negative electrode current collector (231), along an axial direction (O) of the wound structure (201), the positive electrode current collector (211) comprises a positive electrode coated region (212) covered by a positive electrode active substance layer (2111) and a positive electrode uncoated region (213) not covered by the positive electrode active substance layer (2111), the negative electrode current collector (231) comprises a negative electrode coated region (232) covered by a negative electrode active substance layer (2311) and a negative electrode uncoated region (233) not covered by the negative electrode active substance layer (2311);
along a radial direction (R) of the wound structure (201), a part of the positive electrode uncoated region (213) bends toward a center hole (2011) of the wound structure (201), and the positive electrode uncoated region (213) formed in different number of turns are stacked onto each other to form a stacked positive electrode tab region (2131), the stacked positive electrode tab region (2131) comprises a positive electrode tab stack layer number stable region (21312), within the positive electrode tab stack layer number stable region (21312), a number of layers of stacked positive electrode tab (2151) is m;
along the radial direction (R) of the wound structure (201), a part of the negative electrode uncoated region (233) bends toward the center hole (2011), and the negative electrode uncoated region (233) formed in different number of turns are stacked onto each other to form a stacked negative electrode tab region (2331), the stacked negative electrode tab region (2331) comprises a negative electrode tab stack layer number stable region (23312), within the negative electrode tab stack layer number stable region (23312), a number of layers of stacked negative electrode tab (2351) is n;
wherein, m>n.

2. The secondary battery (1) according to claim 1, wherein along the radial direction (R) of the wound structure (201), from an outer periphery to the center hole (2011), the stacked positive electrode tab region (2131) sequentially comprises a positive electrode tab stack layer number increasing region (21311), the positive electrode tab stack layer number stable region (21312), and a positive electrode tab stack layer number decreasing region (21313), the stacked negative electrode tab region (2331) sequentially comprises a negative electrode tab stack layer number increasing region (23311), the negative electrode tab stack layer number stable region (23312), and a negative electrode tab stack layer number decreasing region (23313);
along the radial direction (R) of the wound structure (201), a length (f1) of the positive electrode tab stack layer number stable region (21312) is greater than a length (f2) of the negative electrode tab stack layer number stable region (23312).

3. The secondary battery (1) according to claim 1, wherein along the axial direction (O) of the wound structure (201), the number of the layers of the stacked positive electrode tab (2151) located in the positive electrode tab stack layer number stable region (21312) is 15 layers to 22 layers, or,
along the axial direction (O) of the wound structure (201), the number of the layers of the stacked negative electrode tab (2351) located in the negative electrode tab stack layer number stable region (23312) is 12 layers to 18 layers, or,
a ratio of m to n is 1.05 to 1.5.

4. The secondary battery (1) according to claim 1, wherein the secondary battery (1) further comprises a current collecting plate, the current collecting plate comprises a first current collecting plate (61) and a second current collecting plate (62), the first current collecting plate (61) is welded with the positive electrode tab stack layer number stable region (21312), and a first weld mark is formed accordingly, the second current collecting plate (62) is welded with the negative electrode tab stack layer number stable region (23312), and a second weld mark is formed accordingly;
along the axial direction (O) of the wound structure (201), the number of the layers of the stacked positive electrode tab (2151) connected to the first weld mark is 8 layers to 12 layers, or,
along the axial direction (O) of the wound structure (201), the number of the layers of the stacked negative electrode tab (2351) connected to the second weld mark is 8 layers to 12 layers, or,
along the axial direction (O) of the wound structure (201), within the positive electrode tab stack layer number stable region (21312), a ratio i of the number of the layers of the stacked positive electrode tab (2151) connected to the first weld mark to the number of the layers of the stacked positive electrode tab (2151) located in the positive electrode tab stack layer number stable region (21312) is 0.4 to 0.65, or,
along the axial direction (O) of the wound structure (201), within the negative electrode tab stack layer number stable region (23312), a ratio j of the number of the layers of the stacked negative electrode tab (2351) connected to the second weld mark to the number of the layers of the stacked negative electrode tab (2351) located in the negative electrode tab stack layer number stable region (23312) is 0.5 to 0.8.

5. The secondary battery (1) according to claim 1, wherein along the radial direction (R) of the wound structure (201), a ratio of a length (f1) of the positive electrode tab stack layer number stable region (21312) to a diameter (f3) of the center hole (2011) is 0.5 to 1.4, or,
along the radial direction (R) of the wound structure (201), a ratio of a length (f2) of the negative electrode tab stack layer number stable region (23312) to the diameter (f3) of the center hole (2011) is 0.5 to 1.4, or,
the diameter (f3) of the center hole (2011) is 4mm to 8mm.

6. The secondary battery (1) according to claim 1, wherein a direction from the positive electrode coated region (212) to the positive electrode uncoated region (213) is a first direction (Q1), and a direction from the negative electrode coated region (232) to the negative electrode uncoated region (233) is a second direction (Q2);
along a winding direction (P) of the wound structure (201), the positive electrode uncoated region (213) sequentially comprises a first positive electrode uncoated region (214), a second positive electrode uncoated region (215) and a third positive electrode uncoated region (216), the negative electrode uncoated region (233) sequentially comprises a first negative electrode uncoated region (234), a second negative electrode uncoated region (235) and a third negative electrode uncoated region (236);
along the radial direction (R) of the wound structure (201), the second positive electrode uncoated region (215) bends toward the center hole (2011), and the second positive electrode uncoated region (215) formed in different number of turns are stacked onto each other to form the stacked positive electrode tab region (2131), the second negative electrode uncoated region (235) bends toward the center hole (2011), and the second negative electrode uncoated region (235) formed in different number of turns are stacked onto each other to form the stacked negative electrode tab region (2331);
along the first direction (Q1), the second positive electrode uncoated region (215) comprises the positive electrode tab (2151) and a positive electrode connection region (2152) connected between the positive electrode tab (2151) and the positive electrode coated region (212), neither the first positive electrode uncoated region (214) nor the third positive electrode uncoated region (216) comprises the positive electrode tab (2151);
along the second direction (Q2), the second negative electrode uncoated region (235) comprises the negative electrode tab (2351) and a negative electrode connection region (2352) connected between the negative electrode tab (2351) and the negative electrode coated region (232), neither the first negative electrode uncoated region (234) nor the third negative electrode uncoated region (236) comprises the negative electrode tab (2351);
a number of turns formed by the third positive electrode uncoated region (216) is greater than a number of turns formed by the third negative electrode uncoated region (236);
a value of the number of the turns formed by the third positive electrode uncoated region (216) ranges from 3 to 6, or,
a value of the number of the turns formed by the third negative electrode uncoated region (236) ranges from 1 to 2.

7. The secondary battery (1) according to claim 6, wherein along the axial direction (O) of the wound structure (201), among the turns formed by the second positive electrode uncoated region (215), the second positive electrode uncoated region (215) located at an outermost turn comprises a first bent part, an orthogonal projection of the first bent part is located within an outer periphery of the wound structure (201), or,
along the axial direction (O) of the wound structure (201), among the turns formed by the second negative electrode uncoated region (235), the second negative electrode uncoated region (235) located at an outermost turn comprises a second bent part, an orthogonal projection of the second bent part is located within the outer periphery of the wound structure (201);
and/or,
along the winding direction (P) of the wound structure (201), a length (a1) of the first positive electrode uncoated region (214) is 400mm to 600mm, a length (a2) of the second positive electrode uncoated region (215) is 3000mm to 5000mm, a length (a3) of the third positive electrode uncoated region (216) is 200mm to 500mm, or,
along the winding direction (P) of the wound structure (201), a length (b1) of the first negative electrode uncoated region (234) is 300mm to 500mm, a length (b2) of the second negative electrode uncoated region (235) is 3000mm to 5000mm, a length (b3) of the third negative electrode uncoated region (236) is 100mm to 300mm, or,
a ratio of the length (a3) of the third positive electrode uncoated region (216) to the length (b3) of the third negative electrode uncoated region (236) is 1.5 to 2.5.

8. The secondary battery (1) according to claim 6, wherein the positive electrode tab (2151) is a cut and stacked tab, when the positive electrode sheet (21) is unfolded, the positive electrode current collector (211) is in a flat state, a first acute angle (α) is formed by an extension direction of the positive electrode tab (2151) and a length direction (L1) of the positive electrode current collector (211), and the first acute angle (α) is 30 degrees to 85 degrees;
the negative electrode tab (2351) is a cut and stacked tab, when the negative electrode sheet (23) is unfolded, the negative electrode current collector (231) is in the flat state, a second acute angle (β) is formed by an extension direction of the negative electrode tab (2351) and a length direction (L2) of the negative electrode current collector (231), and the second acute angle (β) is 30 degrees to 85 degrees.

9. The secondary battery (1) according to claim 6, wherein along the radial direction (R) of the wound structure (201), the positive electrode connection region (2152) comprises a first side away from the center hole (2011) of the wound structure (201) and a second side close to the center hole (2011), wherein, at least part of a region of the first side and/or the second side is covered with an insulation layer (24), and the insulation layer (24) comprises a color developer;
the insulation layer (24) covers an entire region of the first side of the positive electrode connection region (2152), and/or,
the insulation layer (24) covers an entire region of the second side of the positive electrode connection region (2152), and/or,
along the first direction (Q1), a maximum width of the insulation layer (24) is greater than or equal to a width of the positive electrode connection region (2152).

10. The secondary battery (1) according to claim 6, wherein along the first direction (Q1), a width of the positive electrode connection region (2152) is 1.5mm to 2.5mm, and/or,
along the second direction (Q2), a width of the negative electrode connection region (2352) is 1mm to 2mm.

11. The secondary battery (1) according to claim 6, wherein along the first direction (Q1), the positive electrode tab (2151) comprises a positive electrode tab transition part (21511) and a positive electrode tab body (21512), the positive electrode tab transition part (21511) is connected between the positive electrode connection region (2152) and the positive electrode tab body (21512), the positive electrode tab transition part (21511) is a bent region of the positive electrode tab (2151);
along the second direction (Q2), the negative electrode tab (2351) comprises a negative electrode tab transition part (23511) and a negative electrode tab body (23512), the negative electrode tab transition part (23511) is connected between the negative electrode connection region (2352) and the negative electrode tab body (23512), the negative electrode tab transition part (23511) is a bent region of the negative electrode tab (2351);
a width (c1) of the positive electrode tab transition part (21511) of the positive electrode tab (2151) located at an outermost turn is greater than a width (d1) of the negative electrode tab transition part (23511) of the negative electrode tab (2351) located at an outermost turn.

12. The secondary battery (1) according to claim 11, wherein along the first direction (Q1), the width (c1) of the positive electrode tab transition part (21511) is 1mm to 2mm, a width (c1) of the positive electrode tab body (21512) is 4.5mm to 5.5mm, a thickness (t1) of the positive electrode tab (2151) is 12µm to 20µm, and/or,
along the second direction (Q2), the width (d1) of the negative electrode tab transition part (23511) is 0.1mm to 1mm, a width (d2) of the negative electrode tab body (23512) is 4mm to 5mm, a thickness (t2) of the negative electrode tab (2351) is 4µm to 11µm.

13. The secondary battery (1) according to claim 1, wherein the housing (10) comprises a side wall (11) disposed in a surrounding manner, one end of the side wall (11) is formed with an opening (12), one end of the housing (10) close to the opening (12) comprises a crimping part (30) recessed toward an interior of the housing (10);
the secondary battery (1) further comprising:
a cover plate (40), disposed at the opening (12);
an insulation sealing member (50), wherein the insulation sealing member (50) is disposed around a periphery of the cover plate (40), so that the cover plate (40) and the housing (10) are insulated and sealed;
a current collecting plate, disposed between the electrode assembly (20) and the cover plate (40), and electrically connected to the housing (10), wherein a connector of the current collecting plate is located on one side of the crimping part (30) facing the electrode assembly (20) and is connected to the crimping part (30) by welding;
and/or,
the secondary battery (1) is a columnar battery.

14. A battery assembly (100), comprising the secondary battery (1) according to any one of claim 1-13.

15. An electronic device (1000), comprising the battery assembly (100) according to claim 14.
